# EUROPEAN PATENT SPECIFICATION

(11) **EP 3 751 834 B1**
(45) Date of publication and mention of the grant of the patent: **05.03.2025**
(21) Application number: 19382486.9
(22) Date of filing: 11.06.2019
(51) Int. Cl.: H04N 23/52, H01R 13/6581, H01R 12/70, H01R 13/6588, H01R 13/6595, H01R 107/00

(54) **VEHICLE IMAGING DEVICE**
FAHRZEUGBILDGEBUNGSVORRICHTUNG
DISPOSITIF D'IMAGERIE DE VÉHICULE

(43) Date of publication of application: 16.12.2020
(73) Proprietor: Ficosa Adas, S.L.U., 08028 Barcelona (ES)
(72) Inventor: ABAD GARCIA, Daniel, 08232 Viladecavalls (Barcelona) (ES); ALVAREZ GOMEZ, José María, 08232 Viladecavalls (Barcelona) (ES)
(74) Representative: Elzaburu S.L.P.

(56) References cited:
- US-A1- 2017 201 661
- US-A1- 2017 271 819
- US-B2- 8 790 136

## Description

### Field of the invention

The present invention relates to an imaging device for a vehicle, specifically a motor vehicle.

The vehicle imaging device object of the invention improves the drawbacks derived from electromagnetic interference among the elements of the device.

### Background of the invention

Known imaging devices, for instance camera devices for a vehicle, comprise the following elements:
- a housing comprising an inner cavity enclosing the elements of the imaging device. Usually, the camera housing comprises a first part or front housing and a second part or back housing, being both parts in electrical contact between them,
- a lens usually partially located outside the front housing,
- an image sensor in communication with the lens and located in the housing,
- a printed circuit board (PCB) located in the housing and connected to the image sensor,
- a connector, in connection with the PCB, suitable to transmit and receive data from the PCB to the connector, and
- a fixing element adapted to fix the connector to the PCB.

It is known in the state of the art that every electric charge generates an electric field around it. When the charge has movement it also creates a magnetic field, so that electric and magnetic fields coexist in the vicinity of an electric current conductor. If the circulating current is continuous, both fields are static, that is to say, their intensity does not change over time.

Printed Circuit Boards (PCBs) include a conductor loop that has self induction, which causes a magnetic field that inherently accompanies any current. In particular, said magnetic field manifests itself when a step voltage change is applied to the input terminals of the loop. Initially, the loop generates a voltage proportional to the change in magnetic flux. This prevents the current from following the voltage step immediately. This is described by Faraday's Law. The duration of this transient voltage depends on the area of the loop. Induction can be used to delay current change. It is known that it causes undesirable electromagnetic fields.

It is also known to solve the above posed problem connecting the housing of the imaging device, which is usually metallic, and the PCB through a conductive element, i.e., a metallic clip located on the surface of the PCB and long enough so that it is in contact with the housing. Therefore, it is known to fit on the PCB a conductive device that joins the PCB with the metallic camera housing to minimize electromagnetic effects. Particularly, it is known connecting the PCB with the surface of the inner cavity of the back housing.

However, as there are geometrical tolerances between the front housing and the back housing, it may happen that the conductive element does not make the necessary contact with the back housing. To do this, a flexible element is employed that deforms or bents without breaking when it contacts the back housing and always ensures permanent contact regardless of the different dimensions and/or manufacturing tolerances of the housing.

The problem with this system is that this conductive element needs to rest on the PCB but there is no space to locate this conductive element on the PCB because there are often too many elements attached to the PCBs.

Therefore, it is an object of the present invention to reduce or remove the electromagnetic waves within an imaging device, overcoming the above mentioned problems of the prior art.

It is known document US2017/271819 disclosing a camera for a motor vehicle including a housing configured to shield electromagnetic radiation at least in certain areas, including a circuit board disposed in the housing, and including an interface device for connecting the camera to the motor vehicle. The interface device is electrically connected to the circuit board, wherein the interface device includes a coaxial plug with an inner conductor and an outer conductor and the camera has a connecting device for electrically connecting the outer conductor to the housing.

It is also known document US2017/201661 disclosing a camera for a vision system of a vehicle includes a front housing portion having a lens, a circuit board having circuitry established thereat, and a plastic rear housing portion having a connector for electrically connecting to a connector end of a wire harness of the vehicle when the camera is disposed at the vehicle. The front housing portion is mated with the rear housing portion with the circuit board disposed therein. The rear housing portion includes internal wall structure establishing internal surfaces of the rear housing portion. The connector of the rear housing portion includes a multi-pin connector having terminals for electrically connecting to circuitry at the circuit board. An electrically conductive metallic shield element is formed to be disposed within the rear housing portion and to correspond with the internal surfaces of the rear housing portion.

### Summary of the invention

An object of the present invention is defined in the appended claims a vehicle imaging device for capturing images comprising:
- an image sensor configured for capturing an image,
- a lens in communication with the image sensor and configured for guiding a light beam into the image sensor,
- a printed circuit board in connection with the image sensor,
- a connector in connection with the printed circuit board to receive data from the printed circuit board to the connector, specifically the connector may transmit and/or receive data from the printed circuit board (3),
- a fixing element adapted to fix the connector to the printed circuit board,
- a housing comprising a first part and a second part, being both parts in electrical contact between them, the housing comprising an inner cavity enclosing at least the printed circuit board, the connector and the fixing element.

The fixing element further comprises a projection, the projection being located such that it contacts the inner cavity of the housing and wherein the printed circuit board is electrically connected to the fixing element, the fixing element being electrically connected to the inner cavity of the housing through the projection and the housing being electrically connected to the printed circuit board.

The present invention provides therefore a fixing element for fixing the connector to the PCB, wherein the fixing element further comprises a projection contacting the housing.

Said projection may be metallic and ensures the contact between, for instance, the back housing and the fixing element, in turn being said fixing element in contact with the PCB.

One of the advantages of the present invention is that it provides means of contact between the PCB and the housing which are not located onto the PCB surface so the printed circuit board does not need additional components incorporated onto its surface. Therefore, the device of the present invention reduces the electromagnetic effect (EMC) also improving the available space in the PCB, hence more elements can be connected to the PCB without increasing the size of the PCB or, alternatively, the PCB can be smaller as there is no need to have an space for locating, for instance, the referred metallic pin. In addition, it avoids the need to have an additional component that must be attached to the printed circuit boards PCB such that a less complex design is achieved.

As previously stated, the electromagnetic effect is reduced as the circuit loop is closed through the following elements: the printed circuit board is electrically connected to the fixing element of the connector, the fixing element is electrically connected to the housing through the projection and finally the housing is also electrically connected to the printed circuit board.

### Description of the figures

To complete the description and in order to provide for a better understanding of the invention, drawings are provided. Said drawings form an integral part of the description and illustrate a preferred embodiment of the invention. The drawings comprise the following figures.
Figure 1 shows a perspective view of a connector of the state of the art attached to a printed circuit board, PCB.
Figure 2 shows a longitudinal cross-section of an imaging device known in the state of the art having a first and a second printed circuit boards.
Figure 3 shows an enlarged view of figure 2 specifically showing the first printed circuit board PCB and the connector.
Figure 4 shows a perspective view of an embodiment of a connector and its fixing element to the printed circuit board according to the invention.
Figure 5 shows a perspective view of a second embodiment of the connector and its fixing element according to the invention.

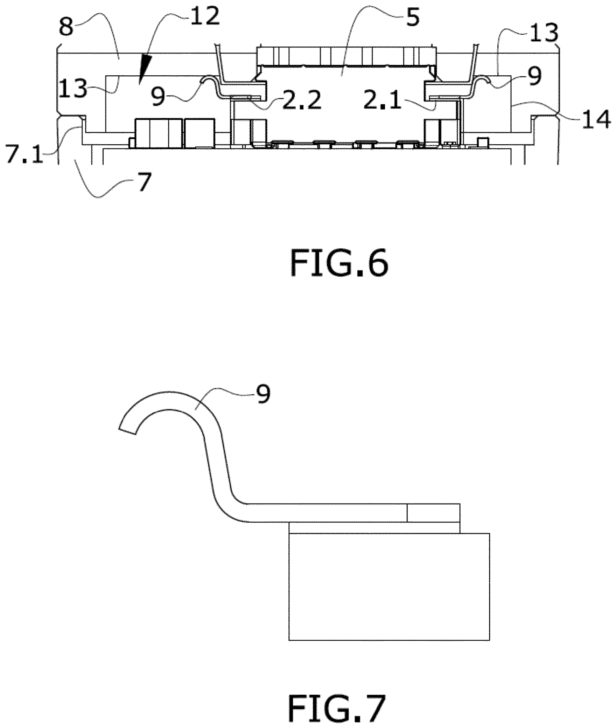

Figure 6 shows a cross-section of the connector of the embodiment disclosed in figure 5.
Figure 7 shows a side view of the projection of the fixing element corresponding to the embodiment shown in figures 5 to 6.

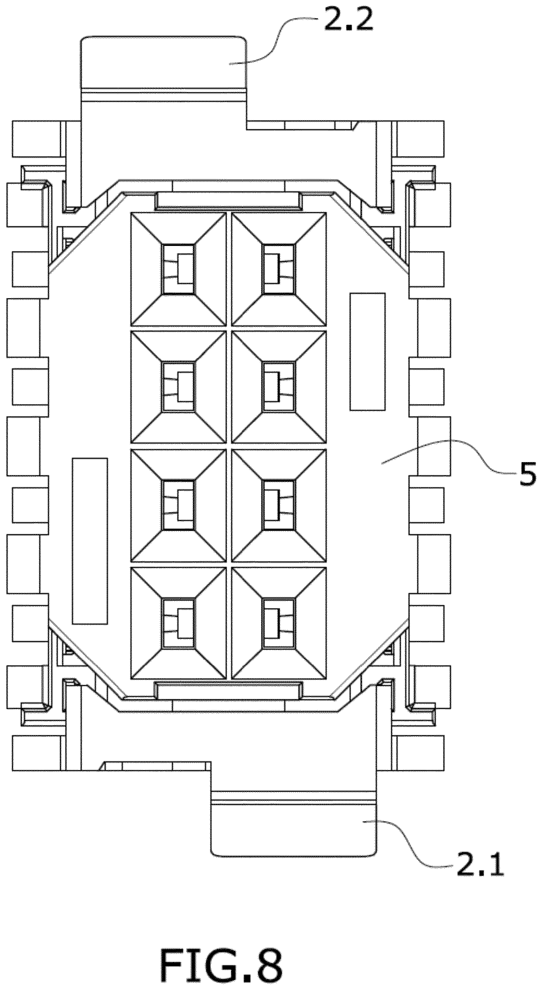

Figure 8 shows a plan view of the connector and the fixing element of the embodiment shown in figures 5 to 7.

### Detailed description of the invention

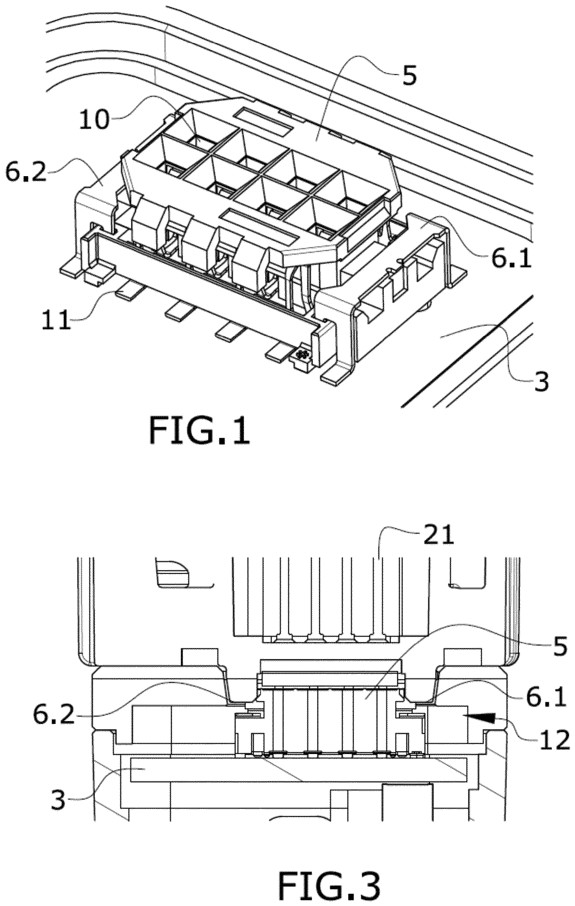

Figure 1 shows an image of the state of the art showing a connector (5). This connector (5) has a plurality of openings (10) configured to receive a plurality of pins (21) that transmit data, in particular, eight pins (21) that are adapted to:
(i) power supply (current);
(ii) data transmission (image transfer);
(iii) connection to the vehicle CAN-BUS or Ethernet, etc.

As shown in figure 1, the connector (5) is attached to the printed circuit board PCB (3) through two fixing elements (6.1, 6.2) located at two opposite ends of the connector (5). These fixing elements (6.1, 6.2) are electrical conductors, hence they are preferably made of metal, more preferably made of steel.

In addition, the connector (5) of the embodiment is connected to the printed circuit board PCB (3) by means of one or more pins (11). Figure 1 shows eight pins (11) that are preferably made of a conductive material and more preferably made of aluminium, copper or brass. The function of these pins (11) is to transmit and receive data from the printed circuit board PCB (3) to the connector (5) which, in turn, will exit through an adapter (20).

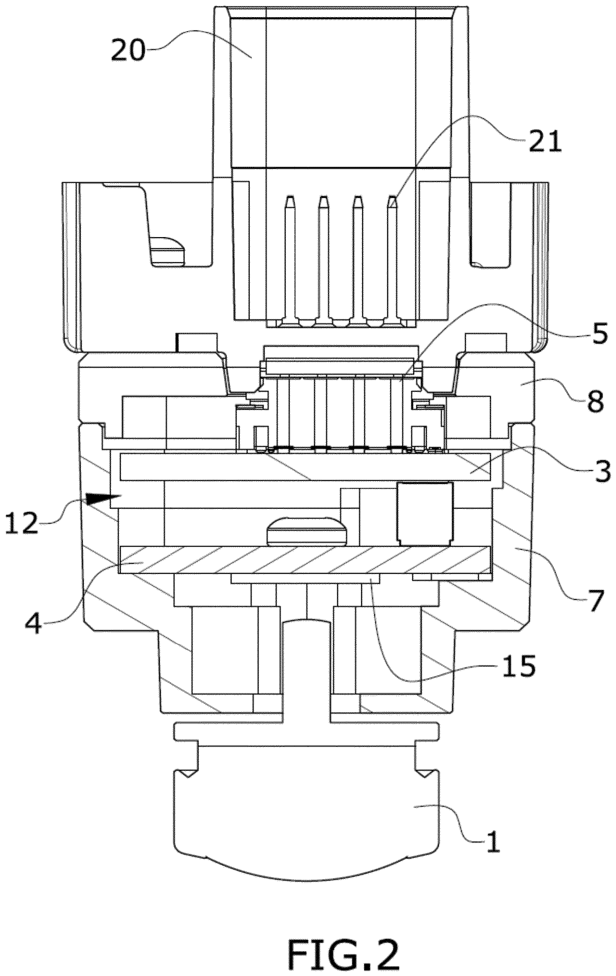

Figure 2 shows an imaging device, specifically, a camera module known in the state of the art that comprises a housing (7, 8) comprising a first part (7) or front housing, and a second part (8) or back housing, wherein both first part (7) and second part (8) are in electrical contact and joined, for instance, by means of a weld.

The housing (7, 8) must necessarily be conductive or contain a conductive line/surface. Preferably, the two parts of the housing (7, 8) are metallic, specifically made of aluminium. Other alternative is that both parts (7, 8) are made of a composite material, for instance comprising carbone fibre and metallic particles. Another alternative would be having a plastic housing (7, 8) comprising in its inner cavity (12) a conductive box, for instance, metallic or a conductive shield.

In the prior art shown in figure 2, two printed circtuit boards (3, 4) are included being located such that a gap between the first PCB (3) and the second PCB (4) exists preventing electric current to drive through. The first printed circuit board (3) is in contact with the connector (5) and the second printed circuit board (4) is connected to the first printed circuit board (3), while the image sensor (15) is disposed thereat the printed circuit board PCB (4).

The housing (7, 8) comprises an inner cavity (12) accommodating a plurality of components. Figure 2 shows a lens (1) partially located in the front housing (7) that guides / directs / projects a light beam from outside to the image sensor (15).

According to the state of the art shown in figure 2, the image sensor (15) is mounted on the second printed circuit board PCB (4). The image sensor (15) is the element of an electronic camera which detects and captures the information that makes up the image. This is achieved by converting the attenuation of light waves (electromagnetic radiation) into electrical signals. It is a chip made up of millions of light-sensitive components (photodiodes or phototransistors) that, when exposed, capture the projected waves of a lens (1), which composes the image. The image sensor (15) is aligned with the lens (1).

The first printed circuit board PCB (3) is an Electronic Control Unit (ECU), in particular, the ECU is an Image Signal Processor (ISP). The ISP receives the electrical signal corresponding to the image generated by the image sensor (15). The first circuit board PCB (3) processes the captured image. Preferably, the first printed circuit board PCB (3) and the second printed circuit board PCB (4) are parallel.

As can be seen in figure 2, the surface of the first printed circuit board PCB (3) opposite to the second PCB (4) is in contact with the connector (5). In particular, the connector (5) transmits information with the first printed circuit board PCB (3) via pins (11).

The outer surface of the back housing (8) is in contact with an adapter (20). In particular, the adapter (20) has a plurality of pins (21) that are received by the plurality of openings (10) of the connector (5).

Figure 3 shows a detailed view of figure 2. Although different elements have been hidden in the first printed circuit board PCB (3) for reasons of clarity, it can be observed that space problems exist. In many designs, it is impossible to place a metallic "clip" for space reasons onto the printed circuit board PCB (3).

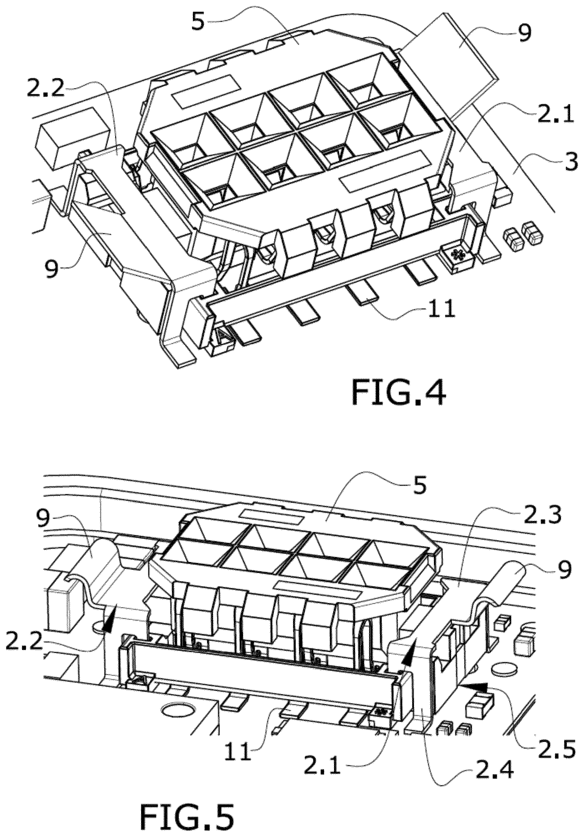

Figure 4 shows a connector (5) attached to a printed circuit board PCB (3) through two fixing elements (2.1, 2.2) object of the invention located at opposite ends of the connector (5), a first fixing element (2.1) and a second fixing element (2.2). In an embodiment, the connector (5) itself comprises the fixing element (2.1, 2.2), thus forming both elements (5, 2.1, 2.2) a single component.

The fixing element (2.1, 2.2) may be joined to the printed circuit board PCB (3) by different means as long as an electrical contact exists, for instance, the fixing element (2.1, 2.2) may be welded to the printed circuit board PCB (3). Other options would be using a threaded joining element or pins going through the PCB (3) being welded to the other face of the PCB (3).

Fixing elements (2.1, 2.2) may have different geometries, for example, a U-shape comprising the open end (2.5) of the U-shape towards the second printed circuit board (4) and comprising a base (2.3) and two legs (2.4) that surrounds each opposite end of the connector (5) having the open end (2.5) of the U-shape towards the printed circuit board (3).

According to the invention, the fixing element (2.1, 2.2) comprises a projection (9). In the shown embodiment, the projection (9) is electrically conductive. Preferably, the projection (9) is made of the same material than the fixing element (6), for instance, steel, copper, brass and more preferably the projection is integrated with the fixing element (2.1, 2.2), i.e., they conform single component.

Furthermore, said projection (9) is flexible, i.e., deforms or bents without breaking and is adapted to be bent to vary its position to contact the housing (7, 8), which means that it is resilient acting as a biasing means adapted to take different manufacturing tolerances.

The inner cavity (12) may have a surface parallel to the PCB (3) or pendicular to the PCB (3) or forming any other angle with it (3) and the projection (9) has to be able to contact with a conductive area of the surface (13, 14) of the inner cavity (12) in a way that it can be adjusted to the required tolerance or shape. According to this, the projection (9) may be straight or curved or straight with a curved end to be able to accommodate manufacturing tolerances.

Therefore, the inclination, length and, in general, the geometry of the projections (9) is such that it allows contact with any part of the housing (7, 8). In particular, on any surface (13, 14) of the inner cavity (12) as long as it is conductive. More particularly, with the surface of inner cavity (12) of the back housing (8). More particularly, a surface (13) parallel to the PCB (3) of the inner cavity (12) of the back housing (8). Other possibility would be, the projection (9) being extended towards the surface (14) of the inner cavity (12) of the back housing (8) perpendicular to the PCB (3). Another possibility would be to contact the surface (7.1) of the front housing (7) perpendicular to the PCB (3).

In an embodiment, the projection (9) is straight and comprises an angle between 30º and 60º. In particular, between 40º and 50º. More particularly, 45º. The width of the projection (9) is between 2 mm and 40 mm. In particular, between 3 mm 20 mm. More particularly, between 4 mm and 8 mm. The thickness of the projection (9) is between 0.05 mm and 8 mm. In particular, between 0.1 mm and 2 mm. In particular, 0.15 mm.

According to an embodiment, the projection (9) can be located in the geometric center of the of the base (2.3) of the U-shape of the fixing element (2.1, 2.2). According to another embodiment, the projections (9) are located at two different sides of the base (2.3) of the U-shape of the fixing element (2.1, 2.2) as canb be seen in figures 4 and 5.

As previously stated, the printed circuit board (3) is electrically connected to the fixing element (2.1, 2.2), the fixing element (2.1, 2.2) being electrically connected to the cavity (12) of the housing (7, 8) through the projection (9) and the housing (7, 8) being electrically connected to the printed circuit board (3).

In an embodiment, the housing (7, 8) makes contact with at least one PCB (3, 4), in another specific embodiment, the PCB (3) makes contact with the front housing (7) and in another embodiment having two PCBs (3, 4), the first PCB (3) is making contact with the front housing (7).

The printed circuit board (3, 4) and the housing (7, 8) are electrically in contact by the following means:
- A conductive glue, or
- Metallic or conductive screws that pass through the PCB (3, 4) and contact the housing (7, 8), or
- Any means that presses the PCB (3, 4) towards the front housing (7) or back housing (8), for instance, a protrusion in the back housing (8) pressing the PCB (3, 4) against the front housing (7).

If the embodiment comprises a single PCB (3), the above contact is made between said PCB (3) and, for instance, the front housing (7), thus the conductive glue or screws are located in said PCB (3). In an embodiment comprising two PCBs (3, 4), the above-mentioned contact is frequently made between the second PCB (4) and the front housing (7) and therefore, the conductive glue or screws would be located in said second PCB (4) to make contact with the mentioned front housing (7).

In addition, the edges of the PCB (3) are coated with a conductive material, for example, copper.

In an embodiment with two PCBs (3, 4), both PCBs (3, 4) are connected to each other through a board-to-board device or through a flex.

The first printed circuit board (3) and the second printed circuit board (4) work with different intensities and voltages. According to one example, they work at approximately 5 V. According to one example, the distance between the two printed circuit boards PCBs (3, 4) is between 1 mm and 10 mm. More particularly, between 3 mm and 6 mm and more specifically is 3.5 mm. These potential differences generate undesirable electromagnetic fluxes.

According to an embodiment of the camera device, the range of the electromagnetic field varies between 50 GHz and 1500 GHz.

## Claims

1. Vehicle imaging device, comprising:
• an image sensor (15) configured for capturing an image,
• a lens (1) in communication with the image sensor (15) and configured for guiding a light beam into the image sensor (15),
• a first printed circuit board (3) in connection with the image sensor (15),
• a connector (5) in connection with the first printed circuit board (3) to receive data from the first printed circuit board (3),
• a housing (7, 8) comprising a first part (7) and a second part (8), being both parts (7, 8) in electrical contact between them, the housing (7, 8) comprising an inner cavity (12) enclosing at least the first printed circuit board (3) and the connector (5),
**characterised in that** it comprises a fixing element (2.1, 2.2) joined to the first printed circuit board (3) and adapted to fix the connector (5) to the first printed circuit board (3), the housing (7, 8) further enclosing the fixing element (2.1, 2.2), the fixing element (2.1, 2.2) comprising a projection (9),
the projection (9) and the fixing element (2.1, 2.2) being a single component the projection (9) being located such that it contacts the inner cavity (12) of the housing (7, 8) and wherein the first printed circuit board (3) is electrically connected to the fixing element (2.1, 2.2), the fixing element (2.1, 2.2) being electrically connected to the inner cavity (12) of the housing (7, 8) through the projection (9) and the housing (7, 8) being electrically connected to the first printed circuit board (3).

2. Vehicle imaging device, according to claim 1, wherein the projection (9) is flexible being configured to be bent to adapt its position to contact the housing (7, 8).

3. Vehicle imaging device, according to any preceding claim, wherein it comprises a second printed circuit board (4), the first printed circuit board (3) being in contact with the connector (5) and the second printed circuit board (4) being connected to the image sensor (15) and to the first printed circuit board (3) and located such that a gap with the first printed circuit board (3) exists.

4. Vehicle imaging device, according to any preceding claim, wherein the inner cavity (12) comprises a surface (13, 14), the projection (9) being in contact with said surface (13, 14) of the inner cavity (12).

5. Vehicle imaging device, according to claim 4, wherein the inner cavity (12) comprises a surface parallel (13) to the first printed circuit board (3) or a surface perpendicular (14) to the first printed circuit board (3), the projection (9) being in contact with one of the surfaces (13, 14) .

6. Vehicle imaging device, according to any preceding claim, wherein the first part (7) of the housing (7, 8) encloses at least the image sensor (15) and the second part (8) of the housing encloses at least the connector (5) and the fixing element (2.1, 2.2), the projection (9) of the fixing element (2.1, 2.2) being in contact with the second part of the housing (8).

7. Vehicle imaging device, according to claims 5 and 6, wherein the projection (9) of the fixing element (2.1, 2.2) is in contact with the surface of the inner cavity (12) of the second part of the housing (8) parallel (13) to the first printed circuit board (3)

8. Vehicle imaging device, according to claims 5 and 6, wherein the projection (9) of the fixing element (2.1, 2.2) is in contact with the surface of the inner cavity (12) of the second part of the housing (8) perpendicular (14) to the first printed circuit board (3).

9. Vehicle imaging device, according to any preceding claim, wherein it comprises two fixing elements (2.1, 2.2), each fixing element (2.1, 2.2) being located at an opposite end of the connector (5) and each fixing element (2.1, 2.2) having a U-shape comprising a base (2.3) and two legs (2.4) that surrounds each opposite end of the connector (5) and having the open (2.5) end of the U-shape towards the first printed circuit board (3).

10. Vehicle imaging device, according to claim 9, wherein the projection (9) is located in a center of the base (2.3) of each U-shape fixing element (2.1, 2.2).

11. Vehicle imaging device, according to claim 9, wherein the projection (9) is located at two different sides of the base (2.3) of each U-shape fixing element (2.1, 2.2).

12. Vehicle imaging device, according to any preceding claim, wherein the projection (9) is made of metal.

13. Vehicle imaging device, according to any preceding claim, wherein the fixing element (2.1, 2.2) is made of metal.

14. Vehicle imaging device, according to any preceding claim, wherein the connector (5) comprises the fixing element (2.1, 2.2).

## Patentansprüche

1. Fahrzeug-Bildgebungsvorrichtung, umfassend:
• einen Bildsensor (15), der zum Erfassen eines Bildes konfiguriert ist,
• eine Linse (1), die mit dem Bildsensor (15) in Verbindung steht und dazu konfiguriert ist, einen Lichtstrahl in den Bildsensor (15) zu leiten,
• eine erste Leiterplatte (3) in Verbindung mit dem Bildsensor (15),
• einen Steckverbinder (5) in Verbindung mit der ersten Leiterplatte (3), um Daten von der ersten Leiterplatte (3) zu empfangen,
• ein Gehäuse (7, 8), das einen ersten Teil (7) und einen zweiten Teil (8) umfasst, die beide in elektrischem Kontakt zueinander stehen, wobei das Gehäuse (7, 8) einen inneren Hohlraum (12) umfasst, der mindestens die erste Leiterplatte (3) und den Steckverbinder (5) umschließt,
**dadurch gekennzeichnet, dass** es ein Befestigungselement (2.1, 2.2) umfasst, das mit der ersten Leiterplatte (3) verbunden und so angepasst ist, dass es den Steckverbinder (5) an der ersten Leiterplatte (3) hält, das Gehäuse (7, 8) umschließt ferner das Befestigungselement (2.1, 2.2), wobei das Befestigungselement (2.1, 2.2)
einen Vorsprung (9) umfasst,
wobei der Vorsprung (9) und das Befestigungselement (2.1, 2.2) ein einziges Bauteil sind, wobei der Vorsprung (9) so angeordnet ist, dass er den inneren Hohlraum (12) des Gehäuses (7, 8) berührt, und wobei die erste Leiterplatte (3) mit dem Befestigungselement (2.1, 2.2) elektrisch verbunden ist, wobei das Befestigungselement (2.1, 2.2) durch den Vorsprung (9) mit dem inneren Hohlraum (12) des Gehäuses (7, 8) elektrisch verbunden ist und das Gehäuse (7, 8) mit der ersten Leiterplatte (3) elektrisch verbunden ist.

2. Fahrzeug-Bildgebungsvorrichtung nach Anspruch 1, wobei der Vorsprung (9) flexibel und dazu konfiguriert ist, gebogen zu werden, um seine Position so anzupassen, dass er das Gehäuse (7, 8) berührt.

3. Fahrzeug-Bildgebungsvorrichtung nach einem der vorstehenden Ansprüche, wobei sie eine zweite Leiterplatte (4) umfasst,
die erste Leiterplatte (3) steht dabei in Kontakt mit dem Steckverbinder (5) und die zweite Leiterplatte (4) ist mit dem Bildsensor
(15) und mit der ersten Leiterplatte (3) verbunden und so angeordnet, dass ein Spalt zur ersten Leiterplatte (3) besteht.

4. Fahrzeug-Bildgebungsvorrichtung nach einem der vorstehenden Ansprüche, wobei der innere Hohlraum (12)
eine Oberfläche (13, 14) umfasst und wobei der Vorsprung (9) in Kontakt mit der Oberfläche (13, 14) des inneren Hohlraums (12) steht.

5. Fahrzeug-Bildgebungsvorrichtung nach Anspruch 4, wobei der innere Hohlraum (12) eine Fläche parallel (13) zur ersten Leiterplatte (3) oder eine Fläche senkrecht (14) zur ersten Leiterplatte (3) umfasst, wobei der Vorsprung (9) mit einer der Flächen (13, 14) in Kontakt steht.

6. Fahrzeug-Bildgebungsvorrichtung nach einem der vorstehenden Ansprüche, wobei das erste Teil (7) des Gehäuses (7, 8) zumindest den Bildsensor (15) umschließt und der zweite Teil (8) des Gehäuses zumindest den Steckverbinder (5) und das Befestigungselement (2.1, 2.2) umschließt, wobei der Vorsprung (9) des Befestigungselements (2.1, 2.2) in Kontakt mit dem zweiten Teil des Gehäuses (8) ist.

7. Fahrzeug-Bildgebungsvorrichtung nach Anspruch 5 und 6, wobei der Vorsprung (9) des Befestigungselements (2.1, 2.2) in Kontakt mit der Oberfläche des inneren Hohlraums (12) des zweiten Teils des Gehäuses (8) parallel (13) zur ersten Leiterplatte (3) steht

8. Fahrzeug-Bildgebungsvorrichtung nach Anspruch 5 und 6, wobei der Vorsprung (9) des Befestigungselements (2.1, 2.2) in Kontakt mit der Oberfläche des inneren Hohlraums (12) des zweiten Teils des Gehäuse (8) senkrecht (14) zur ersten Leiterplatte (3) steht.

9. Fahrzeug-Bildgebungsvorrichtung nach einem der vorstehenden Ansprüche, wobei sie zwei Befestigungselemente (2.1, 2.2) umfasst, wobei jedes Befestigungselement (2.1, 2.2) an einem gegenüberliegenden Ende des Steckverbinders (5) angeordnet ist und jedes Befestigungselement (2.1, 2.2) eine U-Form aufweist, die eine Basis (2.3) und zwei Schenkel (2.4) umfasst, die jeweils das gegenüberliegende Ende des Steckverbinders (5) umschließen und das offene (2.5) Ende der U-Form in Richtung der ersten Leiterplatte (3) aufweisen.

10. Fahrzeug-Bildgebungsvorrichtung nach Anspruch 9, wobei sich der Vorsprung (9) in einer Mitte der Basis (2.3) jedes U-förmigen Befestigungselements (2.1, 2.2) befindet.

11. Fahrzeug-Bildgebungsvorrichtung nach Anspruch 9, wobei sich der Vorsprung (9) an zwei verschiedenen Seiten der Basis (2.3) jedes U-förmigen Befestigungselements (2.1, 2.2) befindet.

12. Fahrzeug-Bildgebungsvorrichtung nach einem der vorstehenden Ansprüche, wobei der Vorsprung (9) aus Metall hergestellt ist.

13. Fahrzeug-Bildgebungsvorrichtung nach einem der vorstehenden Ansprüche, wobei das Befestigungselement (2.1, 2.2) aus Metall hergestellt ist.

14. Fahrzeug-Bildgebungsvorrichtung nach einem der vorstehenden Ansprüche, wobei der Steckverbinder (5) das Befestigungselement (2.1, 2.2) umfasst.

## Revendications

1. Dispositif d'imagerie de véhicule, comprenant :
• un capteur d'image (15) configuré pour capturer une image,
• une lentille (1) en communication avec le capteur d'image (15) et configurée pour guider un faisceau lumineux dans le capteur d'image (15),
• une première carte de circuit imprimé (3) en connexion avec le capteur d'image (15),
• un connecteur (5) en connexion avec la première carte de circuit imprimé (3) pour recevoir des données de la première carte de circuit imprimé (3),
• un boîtier (7, 8) comprenant une première partie (7) et une deuxième partie (8), les deux parties (7, 8) étant en contact électrique entre elles, le boîtier (7, 8) comprenant une cavité interne (12) renfermant au moins la première carte de circuit imprimé (3) et le connecteur (5),
**caractérisé en ce qu'**il comprend un élément de fixation (2.1,2.2) relié à la première carte de circuit imprimé
(3) et adapté pour fixer le connecteur (5) à la première carte de circuit imprimé (3), le boîtier (7, 8) renfermant en outre l'élément de fixation (2.1, 2.2), l'élément de fixation (2.1, 2.2) comprenant
une saillie (9),
la saillie (9) et l'élément de fixation (2.1, 2.2) étant un composant unique, la saillie (9) étant située de telle sorte qu'elle entre en contact avec la cavité interne (12) du boîtier (7, 8) et dans lequel la première carte de circuit imprimé (3) est électriquement connectée à l'élément de fixation (2.1, 2.2), l'élément de fixation (2.1, 2.2) étant électriquement connecté à la cavité interne (12) du boîtier (7, 8) par l'intermédiaire de la saillie (9) et le boîtier (7, 8) étant électriquement connecté à la première carte de circuit imprimé (3).

2. Dispositif d'imagerie de véhicule selon la revendication 1, dans lequel la saillie (9) est flexible et est configurée pour être pliée afin d'adapter sa position pour entrer en contact avec le boîtier (7, 8).

3. Dispositif d'imagerie de véhicule selon l'une quelconque des revendications précédentes, dans lequel il comprend une deuxième carte de circuit imprimé (4),
la première carte de circuit imprimé (3) étant en contact avec le connecteur (5) et la deuxième carte de circuit imprimé (4) étant connectée au capteur d'image
(15) et à la première carte de circuit imprimé (3) et située de telle sorte qu'il existe un espace avec la première carte de circuit imprimé (3).

4. Dispositif d'imagerie de véhicule selon l'une quelconque des revendications précédentes, dans lequel la cavité interne (12)
comprend une surface (13, 14), la saillie (9) étant en contact avec ladite surface (13, 14) de la cavité interne (12).

5. Dispositif d'imagerie de véhicule selon la revendication 4, dans lequel la cavité interne (12) comprend une surface parallèle (13) à la première carte de circuit imprimé (3) ou une surface perpendiculaire (14) à la première carte de circuit imprimé (3), la saillie (9) étant en contact avec l'une des surfaces (13, 14).

6. Dispositif d'imagerie de véhicule selon l'une quelconque des revendications précédentes, dans lequel la première partie (7) du boîtier (7, 8) renferme au moins le capteur d'image (15) et la deuxième partie (8) du boîtier renferme au moins le connecteur (5) et l'élément de fixation (2.1, 2.2), la saillie (9) de l'élément de fixation (2.1, 2.2) étant en contact avec la deuxième partie du boîtier (8).

7. Dispositif d'imagerie de véhicule selon les revendications 5 et 6, dans lequel la saillie (9) de l'élément de fixation (2.1,2.2) est en contact avec la surface de la cavité interne (12) de la deuxième partie du boîtier (8) parallèle (13) à la première carte de circuit imprimé (3).

8. Dispositif d'imagerie de véhicule selon les revendications 5 et 6, dans lequel la saillie (9) de l'élément de fixation (2.1,2.2) est en contact avec la surface de la cavité interne (12) de la deuxième partie du boîtier (8) perpendiculaire (14) à la première carte de circuit imprimé (3).

9. Dispositif d'imagerie de véhicule selon l'une quelconque des revendications précédentes, dans lequel il comprend deux éléments de fixation (2.1, 2.2), chaque élément de fixation (2.1, 2.2) étant situé à une extrémité opposée du connecteur (5) et chaque élément de fixation (2.1, 2.2) ayant une forme de U comprenant une base (2.3) et deux branches (2.4) qui entourent chaque extrémité opposée du connecteur (5) et ayant l'extrémité ouverte (2.5) de la forme de U vers la première carte de circuit imprimé (3).

10. Dispositif d'imagerie de véhicule selon la revendication 9, dans lequel la saillie (9) est située au centre de la base (2.3) de chaque élément de fixation en forme de U (2.1, 2.2).

11. Dispositif d'imagerie de véhicule selon la revendication 9, dans lequel la saillie (9) est située sur deux côtés différents de la base (2.3) de chaque élément de fixation en forme de U (2.1, 2.2).

12. Dispositif d'imagerie de véhicule selon l'une quelconque des revendications précédentes, dans lequel la saillie (9) est en métal.

13. Dispositif d'imagerie de véhicule selon l'une quelconque des revendications précédentes, dans lequel l'élément de fixation (2.1, 2.2) est en métal.

14. Dispositif d'imagerie de véhicule selon l'une quelconque des revendications précédentes, dans lequel le connecteur (5) comprend l'élément de fixation (2.1, 2.2).
